# EUROPÄISCHE PATENTANMELDUNG

(11) **EP 4 677 983 A1**
(43) Veröffentlichungstag der Anmeldung: **14.01.2026**
(21) Anmeldenummer: 25170288.2
(22) Anmeldetag: 14.04.2025
(51) Int. Cl.: A01C 5/06, A01C 7/20

(54) **SCHARSYSTEM SOWIE SÄMASCHINE MIT EINEM SOLCHEN SCHARSYSTEM**

(30) Priorität: 11.07.2024 DE 102024119719
(71) Anmelder: Pöttinger Landtechnik GmbH, 4710 Grieskirchen (AT)
(72) Erfinder: KRAUS, Hans-Georg, 4710 Grieskirchen (AT); KIRCHMAYR, Alois, 4710 Grieskirchen (AT)
(74) Vertreter: Lorenz Seidler Gossel Part. mbB

(57) **Zusammenfassung**

Die vorliegende Erfindung betrifft ein Scharsystem (1) für eine landwirtschaftliche Arbeitsmaschine, mit einer Scharscheibe (2) zum Ziehen einer Säfurche, einer Tiefenführungsrolle (11) zur Arbeitstiefenführung der Scharscheibe (2) sowie einer der Scharscheibe (2) nachlaufenden Andrückrolle (7) zum Andrücken von in der Säfurche abgelegtem Gut und/oder Verschließen der Säfurche. Die Erfindung betrifft ferner auch eine Sämaschine mit einem solchen Scharsystem (1). Erfindungsgemäß sind die Tiefenführungsrolle (11) und die Andrückrolle (7) nach Art eines Bogey-Fahrwerks an einem gemeinsamen, wippbaren Aufhängungsträger (13) gelagert, wobei die Tiefenführungsrolle (11) überlappend mit und angrenzend an eine Stirnseite der Scharscheibe (2) angeordnet ist und einen Abstreifer zum Abstreifen von Erdreich von der Scharscheibe (2) bildet.

## Beschreibung

Die vorliegende Erfindung betrifft ein Scharsystem für eine landwirtschaftliche Arbeitsmaschine, mit einer Scharscheibe zum Ziehen einer Säfurche, einer Tiefenführungsrolle zur Arbeitstiefenführung der Scharscheibe sowie einer der Scharscheibe nachlaufenden Andrückrolle zum Andrücken von in der Säfurche abgelegtem Gut und/oder Verschließen der Säfurche. Die Erfindung betrifft ferner auch eine Sämaschine mit einem solchen Scharsystem.

Landwirtschaftliche Ausbringmaschinen zum Ausbringen von körnigem Gut wie Saatgut und/oder Dünger, beispielsweise in Form von Sämaschinen für die Direktsaat, umfassen häufig ein Scharsystem, bei dem eine Scharscheibe eine Säfurche zieht und eine der Scharscheibe nachlaufende Andrückrolle das an dem Säschar abgelegte Gut wie Saatgut oder Dünger andrückt und/oder die Säfurche verschließt, wobei einem Säschar auch ein paar Zwillings-Andrückrollen nachlaufen können, um die Säfurche von beiden Seiten her zu verschließen. Solche Zwillings-Andrückrollen können koaxiale Drehachsen besitzen, aber auch leicht V-förmig zueinander angestellt sein, so dass der Abstand zwischen den Zwillings-Andrückrollen vom Boden weg nach oben zunimmt, wobei die Zwillings-Andrückrollen ungeachtet einer möglichen V-Stellung im Wesentlichen auf gleicher Höhe in Fahrtrichtung betrachtet laufen können.

Beispielsweise zeigt die Schrift EP 3 878 259 A1 eine der Scharscheibe nachlaufende Andrückrolle, wobei die genannte Andrückrolle zusammen mit der Scharscheibe nach Art eines Bogey-Fahrwerks an einem gemeinsamen Schwenkaufhängungsträger gelagert ist.

Die genannte Scharscheibe kann in per se bekannter Weise verkippt angeordnet sein, wobei die Drehachse der Scharscheibe einerseits gegenüber einer horizontalen Ebene um einen spitzen Winkel verkippt sein kann und/oder andererseits gegenüber einer aufrechten, sich quer zur Fahrtrichtung erstreckenden Ebene um einen ebenfalls spitzen Winkel verkippt sein kann, so dass die Scharscheibe eine Furche gewünschter Breite und auch Tiefe zieht. Je nach Ausbildung der Scharscheibe kann aber auch nur eine einfache Verkippung oder auch gar keine Verkippung der Scharscheibe vorgesehen sein.

Ungeachtet der genannten Verkippung der Scharscheibe kann das Scharsystem, zusätzlich zu der genannten Andrückrolle, eine Tiefenführungsrolle aufweisen, um die Scharscheibe in einer gewünschten Arbeitstiefe zu führen. Solche Tiefenführungsrollen können ebenfalls nachlaufend zur Scharscheibe angeordnet und quer zur Fahrtrichtung ein Stück weit versetzt positioniert sein, um nicht in der Säfurche zu laufen, vgl. beispielsweise DE 10 2008 044 520 A1. Alternativ ist es auch bekannt, zwei Tiefenführungsrollen rechts und links von der Scharscheibe auf etwa gleicher Höhe laufen zu lassen, vgl. beispielsweise US 7,191,715 B2.

Um die Arbeitstiefe der Scharscheibe einstellen zu können, kann die Scharscheibe selbst höhenverstellbar sein, beispielsweise indem der Scharscheibenträger verkippt bzw. verschwenkt wird. Oft sind Scharscheiben an einem Scharscheiben-Tragarm aufgehängt, der über Gummilagerwürste oder in anderer Weise elastisch an einem Querträger aufgehängt ist und sich schräg nach hinten unten zur Scharscheibe erstreckt. Wird der Querträger verdreht, verändert sich die Ausgangs-Schwenkstellung des Scharscheiben-Tragarms und damit die Höhe der Scharscheibe. Alternativ oder zusätzlich kann auch die genannte Tiefenführungsrolle höheneinstellbar aufgehängt sein, beispielsweise durch eine Schwinge, die über eine längerveränderbare Strebe oder ein längenveränderbares Federband tiefer oder höher gefahren werden kann.

Auch bei multiplen Verstellmöglichkeiten ist die Tiefenführung der Scharscheibe in der gewünschten Arbeitstiefe ein komplex einzustellender Parameter, da auch von der der Scharscheibe nachlaufenden Andrückrolle vertikale Kräfte auf das Scharsystem ausgeübt werden, die der abwärts gerichteten Eindringkraft der Scharscheibe entgegenwirken bzw. sich mit den Stützkräften der Tiefenführungsrolle aufaddieren. Dabei reagiert das Scharsystem nicht nur bezüglich der Einstellung der Arbeitstiefe per se empfindlich, sondern es leidet ggf. auch die Laufruhe der Scharscheibe, insbesondere wenn diese in der genannten Weise verkippt angeordnet ist, wenn die Bodenaufstandskräfte in unterschiedlicher Weise auf die Tiefenführungsrolle und die Andrückrolle verteilt werden bzw. in unterschiedlichem Maße von Tiefenführungsrolle einerseits und Andrückrolle andererseits aufgebracht werden.

Hiervon ausgehend liegt der vorliegenden Erfindung die Aufgabe zugrunde, ein verbessertes Scharsystem sowie eine verbesserte Sämaschine der genannten Art zu schaffen, die Nachteile des Stands der Technik vermeiden und letzteren in vorteilhafter Weise weiterbilden. Insbesondere soll für eine exakte Ablagegenauigkeit des Saatguts bzw. Düngers eine variabel einstellbare, exakte Tiefenführung des Säschars erreicht werden, ohne Abstriche bei der Laufruhe des Schäschars zu erleiden.

Erfindungsgemäß wird die genannte Aufgabe durch ein Scharsystem gemäß Anspruch 1 sowie eine Sämaschine gemäß Anspruch 20 gelöst, wobei bevorzugte Ausgestaltungen der Erfindung Gegenstand der Unteransprüche sind.

Es wird also vorgeschlagen, die Tiefenführungsrolle und die Andrückrolle gemeinsam aufzuhängen bzw. an einer gemeinsamen Aufhängung zusammenzufassen und die Tiefenführungsrolle direkt benachbart zur Scharscheibe anzuordnen, was nicht nur einer erhöhten Laufruhe zugutekommt, sondern auch ungewolltes Aufwerfen von Erdklumpen bzw. Erdreich durch die Scharscheibe zu minimieren. Erfindungsgemäß sind die Tiefenführungsrolle und die Andrückrolle nach Art eines Bogey-Fahrwerks an einem gemeinsamen, wippbaren Aufhängungsträger gelagert, wobei die Tiefenführungsrolle überlappend mit und angrenzend an eine Stirnseite der Scharscheibe angeordnet ist und einen Abstreifer zum Abstreifen von Erdreich von der Scharscheibe bildet.

Durch die Bogey-Aufhängung von Tiefenführungsrolle und Andrückrolle an einen gemeinsamen, wippbaren Aufhängungsträger wird der Untergrund nicht mehr nur punktuell abgetastet, sondern auf die zwei Aufstandspunkte der Tiefenführungsrolle und der Andrückrolle, die in Fahrtrichtung voneinander beabstandet sind, aufgeteilt. Hierdurch kann zum einen eine Vergleichmäßigung der Aufstandskräfte erzielt werden, die auch bei einer Verstellung des Systems zur Veränderung der Arbeitstiefe im Wesentlichen erhalten bleibt und nicht aus dem Gleichgewicht gerät. Zum anderen ist die Koppelung der Tiefenführungs- und Andrückrollen an einem gemeinsamen, wippbaren Aufhängungsträger der Laufruhe des Scharsystems zuträglich. Gleichzeitig kann die Tiefenführungsrolle durch ihre Anordnung unmittelbar seitlich an und überlappend mit der Scharscheibe Erdklumpen, die an der Scharscheibe kleben bleiben, abstreifen, was nicht nur das ungewollte Verspritzen von Erdreich verhindert, sondern auch die Laufruhe durch Beseitigung von Unwuchten, die an der Scharscheibe klebende Erdklumpen mit sich bringen, reduziert werden. Zusätzlich erhält die Bogey-fahrwerksartige Aufhängung zusätzliche Querstabilität durch die Position der Tiefenführungsrolle unmittelbar benachbart zur Scharscheibe.

In Weiterbildung der Erfindung kann die Tiefenführungsrolle derart angeordnet werden, dass, bei Betrachtung des Scharsystems in einer Blickrichtung liegend quer zur Fahrtrichtung, ein Schnittpunkt der Außenumfänge der Scharscheibe und der Tiefenführungsrolle zumindest näherungsweise im Bereich des Austrittspunkt liegt, an dem die Scharscheibe aus der Säfurche austritt bzw. den Boden verlässt. Je nach Arbeitstiefe kann sich der genannte Austrittspunkt ein wenig verschieben bzw. entlang der Umfangslinie der Scharscheibe wandern, wobei der genannte Austrittspunkt jedoch regelmäßig im Bereich von etwa 7 Uhr bis 8 Uhr liegt, wenn sich die Scharscheibe im Uhrzeigersinn dreht, d.h. der Austrittspunkt liegt in der heckseitigen Hälfte der Scharscheibe, genauer gesagt in deren unteren, heckseitigen Quadranten. Die Tiefenführungsrolle wird vorteilhafterweise etwa derart angeordnet, dass sich, bei Betrachtung des Scharsystems in einer Blickrichtung liegend quer zur Fahrtrichtung, die Umfangslinie der Tiefenführungsrolle mit der Umfangslinie der Scharscheibe etwa im Bereich des genannten Austrittspunkts schneidet.

Die Tiefenführungsrolle hat dabei mit der Scharscheibe an sich zwei Schnittpunkte, an denen sich die jeweiligen Umfangslinien schneiden, wobei es einen oben liegenden und einen unten liegenden Schnittpunkt gibt. Die Tiefenführungsrolle wird dabei derart angeordnet, dass der untere Schnittpunkt im Bereich des Austrittspunkts liegt, an dem die Scharscheibe aus der Säfurche tritt bzw. den Boden verlässt.

Durch eine solche Anordnung, d.h. eine Überlappung mit einem Schnittpunkt im Bereich des genannten Austrittspunkts der Scharscheibe, kann an der Scharscheibe klebendes Erdreich sehr früh abgestreift werden bzw. bleibt an der Scharscheibe haftendes Erdreich unmittelbar im Boden bzw. auf der Bodenoberfläche, so dass die Scharscheibe gar nicht erst Erdklumpen, Staub und dergleichen nach oben ziehen kann, sondern die gesamte Erde am Boden liegen bleibt. Das Hochziehen von Erdklumpen ist an sich speziell bei feuchten Böden ein Problem, wenn die Erde an den Scharscheiben kleben bleibt, so dass dann das Erdreich herumgeschleudert bzw. verstreut werden würde. Um eine saubere Säfurche zu schneiden, ohne das Erdreich nach oben zu werfen, ist es sehr hilfreich, wenn die Tiefenführungsrolle in der genannten Weise so angeordnet wird, dass sie einen Abstreifer zum Abstreifen der Scharscheibe bildet, insbesondere wenn der genannte Schnittpunkt die beschriebene Position einnimmt.

Die Tiefenführungsrolle ist vorteilhafterweise derart angeordnet, dass der besagte Schnittpunkt mit der Scharscheibe in einer hinteren Hälfte der Tiefenführungsrolle, insbesondere in einem heckseitigen, unteren Quadranten der Tiefenführungsrolle liegt.

Die Drehachse der Tiefenführungsrolle kann sich in vorteilhafter Weiterbildung der Erfindung, in Fahrtrichtung betrachtet, zwischen der Drehachse der Scharscheibe und dem hintersten Umfangspunkt der Scharscheibe befinden, wobei sich die Drehachse der Tiefenführungsrolle je nach Wippstellung des Bogey-artigen Aufhängungsträgers ein Stück weiter oben oder ein Stück weiter unten befinden kann bzw. auf und ab wandern kann. Vorteilhafterweise kann die Anordnung derart getroffen sein, dass die Drehachse der Tiefenführungsrolle, bei Betrachtung des Scharsystems in einer Blickrichtung liegend quer zur Fahrtrichtung, innerhalb des Umfangs der Scharscheibe liegt, insbesondere in einer hinteren Hälfte des Scharscheibe bzw. der Scharscheibenkontur.

Um die Bodenaufstandskräfte der gemeinsam aufgehängten Tiefenführungs- und Andrückrollen in der gewünschten Weise auf die Tiefenführungsrolle einerseits und die Andrückrolle andererseits aufzuteilen, kann in Weiterbildung der Erfindung der gemeinsame, wippbare Aufhängungsträger exzentrisch gelagert sein, so dass der Abstand der Drehachse der Tiefenführungsrolle von der Wippachse des Aufhängungsträgers von dem Abstand der Drehachse der Andrückrolle von der genannten Wippachse abweicht. Der wippbare Aufhängungsträger ist also selbst asymmetrisch ausgebildet bzw. asymmetrisch gelagert.

Insbesondere kann die Wippachse des gemeinsamen Aufhängungsträgers näher bei der Andrückrolle als bei der Tiefenführungsrolle liegen, um einen größeren Teil des Andrucks auf die Andrückrolle zu geben. Beispielsweise können die Beabstandung der Andrückrollen-Drehachse von der Wippachse des Aufhängungsträgers und die Beabstandung der Tiefenführungsrollen-Drehachse von der genannten Wippachse in einem Verhältnis zueinander im Bereich von 20:80 bis 40:60 oder 25:75 bis 33:67 aufgeteilt werden.

In vorteilhafter Weiterbildung der Erfindung ist die Bogey-artige, gemeinsame Aufhängung von Tiefenführungsrolle und Andrückrolle hinsichtlich des genannten Beabstandungsverhältnisses bzw. hinsichtlich der Asymmetrie der Wippachse veränderlich ausgebildet bzw. einstellbar konfiguriert, so dass je nach Bodenverhältnissen der gemeinsame, wippbare Aufhängungsträger mehr oder weniger stark asymmetrisch gelagert sein kann, um das Verhältnis der Aufstandskräfte stärker oder weniger stark zu der Andrückrolle hin zu verschieben.

Vorteilhafterweise ist die Bogey-Aufhängung dabei derart ausgebildet, dass auch bei unterschiedlich stark eingestellten Asymmetrien der Schnittpunkt der Außenumfänge von Tiefenführungsrolle und Scharscheibe zumindest im Wesentlichen unverändert im Bereich des genannten Austrittspunkts bleibt, an dem die Scharscheibe aus der Säfurche austritt bzw. den Boden verlässt. Eine solche Verstellbarkeit der Asymmetrie bzw. der Hebelverhältnisse am wippbaren Bogeyträger, die den genannten Schnittpunkt zwischen Tiefenführungsrolle und Säschar im Wesentlichen unverändert belässt, kann beispielsweise einen verstellbaren Lagerbock umfassen, der in Fahrtrichtung betrachtet mehr zur Tiefenführungsrolle hin verschoben oder mehr zur Andrückrolle hin verschoben werden kann, wobei gleichzeitig die Wippachse an verschiedenen Punkten des gemeinsamen, wippbaren Aufhängungsträgers entsprechend fixiert werden kann.

Beispielsweise kann hierzu der Aufhängungsträger ein Langloch umfassen, in welchem die Wippachse verschoben werden kann, wenn der genannte Lagerbock verschoben wird, wobei beispielsweise durch verschiebliche, in verschiedenen Positionen verstellbare Anschläge die Wippachse dann fixiert werden kann. Alternativ zu einem Langloch kann der Aufhängungsträger aber auch ein Loch bilden mit mehreren Wippachsen-Ausnehmungen umfassend, so dass bei Verstellung des Lagerbocks die Wippachse in ein weiter vorne liegendes oder weiter hinter liegendes Loch gesteckt werden kann.

Alternativ oder zusätzlich kann der genannte Aufhängungsträger auch längenveränderbar ausgebildet sein, bspw, teleskopierbar, insbesondere in einem Abschnitt zwischen seiner Wippachse und der Andrückrolle.

Alternativ oder zusätzlich kann die Einstellbarkeit der Asymmetrie der Bogey-Aufhängung von Tiefenführungsrolle und Andrückrolle aber auch eine verstellbare Lagerung der Andrückrolle an dem gemeinsamen Aufhängungsträger umfassen. Beispielsweise kann die Drehachse der Andrückrolle in verschiedenen Positionen am gemeinsamen Aufhängungsträger positioniert werden, die einmal näher an der Wippachse und einmal weiter weg von der Wippachse des Aufhängungsträgers positioniert bzw. beabstandet sind. Auch hier kann ein Langloch Verwendung finden, indem die Drehachse der Andrückrolle verschoben und durch beispielsweise verstellbare Anschläge stufenlos oder stufenweise fixiert werden kann.

Alternativ oder zusätzlich zu einem Langloch kann aber auch ein Lochbild mit mehreren separaten Lagerausnehmungen zum Positionieren der Drehachse der Andrückrolle an dem gemeinsamen, wippbaren Aufhängungsträger vorgesehen sein. Hierbei kann dann durch Umstecken der Drehachse der Andrückrolle in ein weiter vorne oder weiter hinter liegendes Loch eine Verstellung der Asymmetrie der Positionierung der Wippachse zwischen Andrückrolle und Tiefenführungsrolle erreicht werden, ohne dass der gewünschte Schnittpunkt zwischen den Außenumfängen von Tiefenführungsrolle und Scharscheibe verstellt wird.

Um die Abstreiferwirkung der Tiefenführungsrolle zu verbessern, kann in Weiterbildung der Erfindung die Lauffläche der Tiefenführungsrolle bzw. deren Umfangskontur bei Betrachtung in einem Querschnitt, der die Drehachse der Tiefenführungsrolle enthält, asymmetrisch ausgebildet sein. Insbesondere kann der der Scharscheibe zugewandte Teil der Umfangskontur bzw. der äußere Randabschnitt der Tiefenführungsrolle anders ausgebildet sein als der entsprechende, von der Scharscheibe abgewandte Teil der Umfangskontur bzw. des Randabschnitts.

Vorteilhafterweise kann die Tiefenführungsrolle im Übergangsbereich von Lauffläche zu Seitenwange auf der der Scharscheibe zugewandten Seite eine Knickspantkontur besitzen. Beispielsweise kann die Tiefenführungsrolle zur Scharscheibe hin eine spitzwinklige Kante besitzen, beispielsweise von der der Scharscheibe zugewandten Seitenwange in einem etwa rechten Winkel oder einem Winkel <90° in die Lauffläche übergehend.

In Weiterbildung der Erfindung kann die Lauffläche der Tiefenführungsrolle, betrachtet in einem die Drehachse enthaltenden Querschnitt, leicht konkav gewölbt sein und zu den Seitenwangen hin ansteigen, wobei der Übergang zu der Seitenwange, die der Scharscheibe zugewandt ist, kantig ausgebildet und/oder im Wesentlichen ohne Rundungsradius ausgebildet sein kann, während der Übergang zur Seitenwange auf der von der Scharscheibe abgewandten Seite abgerundet sein kann.

Durch eine kantige Kontur zur Scharscheibe hin kann die Abstreiferwirkung beträchtlich verbessert werden, insbesondere im Zusammenspiel mit einer zur randseitigen Kante hin ansteigenden Laufflächenkontur, so dass eine insgesamt spitzwinklige Rollenkante an der Scharscheibe entlang streifen kann.

Die Erfindung wird nachfolgend anhand eines bevorzugten Ausführungsbeispiels und zugehörigen Zeichnungen näher erläutert. In den Zeichnungen zeigen:
- Fig. 1:: eine Seitenansicht des Scharsystems einer Sämaschine nach einer vorteilhaften Ausführung der Erfindung, wobei die Scharscheibe und die Tiefenführungsrolle des Scharsystems in einer bestimmungsgemäßen Arbeitsstellung gezeigt sind, in der ein Schnittpunkt der Umfangskonturen etwa im Bereich eines Austritts der Scharscheibe aus dem Erdreich liegt,
- Fig. 2:: eine Seitenansicht des Scharsystems von einer im Vergleich zu Fig. 1 gegenüberliegenden Seite her, die die Aufhängung der Scharscheibe sowie des gemeinsamen, wippbaren Aufhängungsträgers für die Tiefenführungs- und Andrückrollen sowie das an der Scharscheibe angeordnete Ausbringelement zeigt,
- Fig. 3:: eine Draufsicht auf das Scharsystem aus den vorhergehenden Figuren, die die direkte Seite an Seite nebeneinander liegende Anordnung von Scharscheibe und Tiefenführungsrolle zeigt,
- Fig. 4:: eine Seitenansicht des Scharsystems ähnlich Fig. 1, wobei die Bogey-artige Aufhängung der Tiefenführungsrolle und der Andrückrolle in einer verkippten Stellung gezeigt ist, in der die Tiefenführungsrolle tiefer liegt als die Andrückrolle,

- Fig. 5:: eine Seitenansicht des Scharsystems, die die Bogey-artige Aufhängung in einer umgekehrt verkippten Stellung zeigt, in der die Tiefenführungsrolle höher läuft als die Andrückrolle,

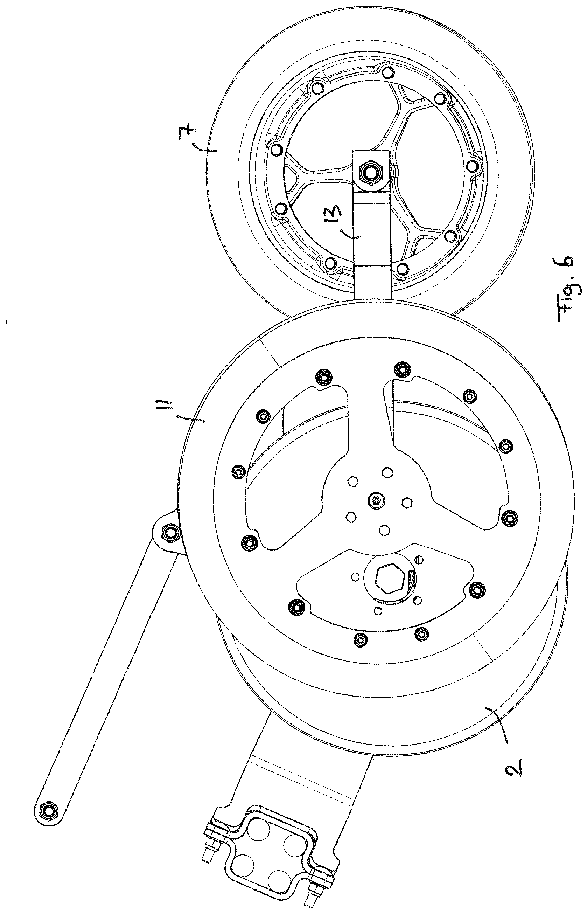

- Fig. 6:: eine Seitenansicht eines Scharsystems ähnlich Fig. 1, bei dem die Tiefenführungsrolle größer als die Scharscheibe ausgebildet ist,
- Fig. 7:: eine Seitenansicht eines Scharsystems ähnlich Fig. 1, wobei der gemeinsame, wippbare Aufhängungsträger, an dem die Tiefenführungsrolle und die Andrückrolle gemeinsam gelagert sind, einen im Vergleich zu den vorherigen Figuren deutlich verkürzten Abstand der Andrückrollen-Drehachse zur Wippachse des Trägers besitzt,
- Fig. 8:: eine Draufsicht auf das Scharsystem aus Fig. 7,
- Fig. 9:: eine Seitenansicht eines Scharsystems ähnlich Fig. 1, wobei der gemeinsame, wippbare Aufhängungsträger, an dem die Tiefenführungsrolle und die Andrückrolle gemeinsam gelagert sind, eine Einstellmöglichkeit für verschiedene Hebelarmverhältnisse und damit verschiedene Aufteilungen der Aufstandskräfte für die Tiefenführungsrolle und die Andrückrolle besitzt,
- Fig. 10:: eine Seitenansicht eines Scharsystems ähnlich Fig. 1, wobei die verschiedenen Verstellmöglichkeiten zum Einstellen der Arbeitstiefe schematisch dargestellt sind,
- Fig. 11:: eine Draufsicht auf ein Scharsystem ähnlich Fig. 3, wobei die Andrückrolle in Form von Zwillings-Andrückrollen ausgebildet ist, die einen gemeinsamen Anlenkpunkt an dem wippbaren Aufhängungsträger der Bogey-artigen Aufhängung besitzen, und
- Fig. 12:: eine ausschnittsweise Darstellung der wippbaren Lagerung des gemeinsamen Aufhängungsträgers für die Tiefenführungs- und Andrückrollen, die Pendelanschläge zur Begrenzung der Wippbewegung des Aufhängungsträgers zeigt.

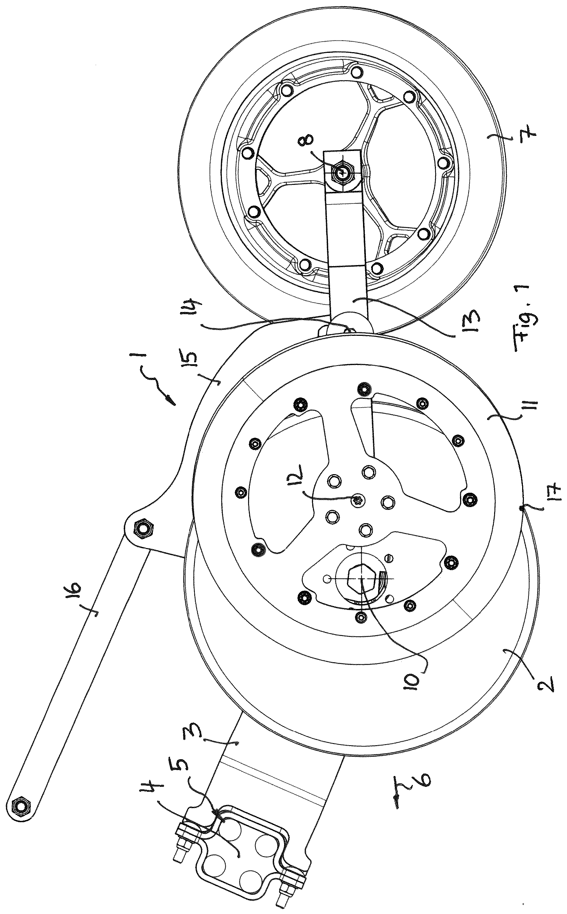

Wie die Figuren zeigen, umfasst das Scharsystem 1 eine Scharscheibe 2, die an einem Schartragarm 3 drehbar gelagert sein kann, welcher sich von seinem Aufhängungspunkt schräg nach hinten unten zur Scharscheibe 2 hin erstrecken kann, vgl. Fig. 1. Der besagte Schartragarm 3 kann beispielsweise an einem Querträger 4 elastisch wippbar gelagert sein, beispielsweise mittels einer gummielastischen Quetschlagerung 5, vgl. Fig. 1. Der besagte Querträger 4 kann sich liegend quer zur Fahrtrichtung 6 der Sämaschine erstrecken und eine Vielzahl von solchen Schartragarmen 3 lagern, um in Reihe nebeneinander eine entsprechende Vielzahl an Scharscheiben 2 aufzuhängen. Es versteht sich, dass das Scharsystem 1 nicht nur eine Scharscheibe und nicht ein zugehöriges Paar Tiefenführungs- und Andrückrollen umfassen kann, sondern in Reihe nebeneinander angeordnet eine Vielzahl solcher Scharscheiben nebst zugehörigen Tiefenführungs- und Andrückrollen.

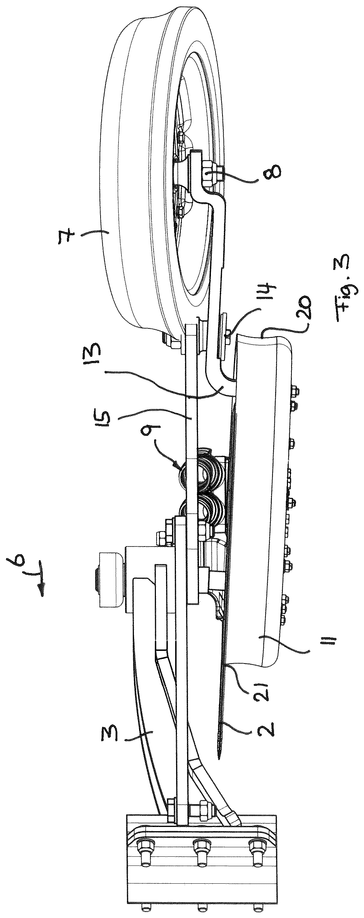

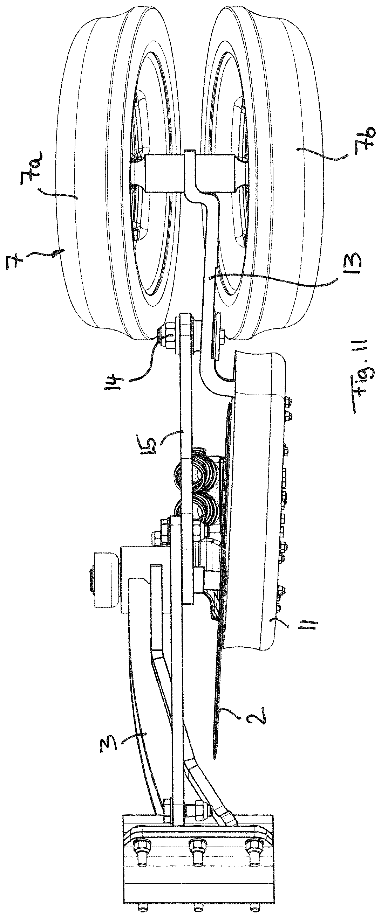

Wie die Figuren zeigen, umfasst das Scharsystem 1 weiterhin eine der Scharscheibe 2 nachlaufende Andrückrolle 7, um in der von der Scharscheibe 2 gezogenen Säfurche abgelegtes Saatgut anzudrücken und/oder die besagte Säfurche zu verschließen. Die genannte Andrückrolle 7 kann eine Einzelrolle sein, wie beispielsweise in Fig. 3 dargestellt, oder auch eine Zwillings-Andrückrolle 7a, b umfassen, wie dies Fig. 11 zeigt, wobei solche Zwillings-Andrückrollen 7a, b zueinander V-förmig aufgespreizt angeordnet sein können derart, dass der Abstandsspalt zwischen den Zwillings-Andrückrollen von unten nach oben zunimmt, vgl. Fig. 11. Auch im Falle einer einzelnen Andrückrolle 7 kann diese eine verkippte Anordnung besitzen, insbesondere mit ihrer Drehachse 8 gegenüber einer horizontalen Ebene spitzwinklig verkippt sein, wobei aber auch eine nicht verkippte Anordnung möglich ist.

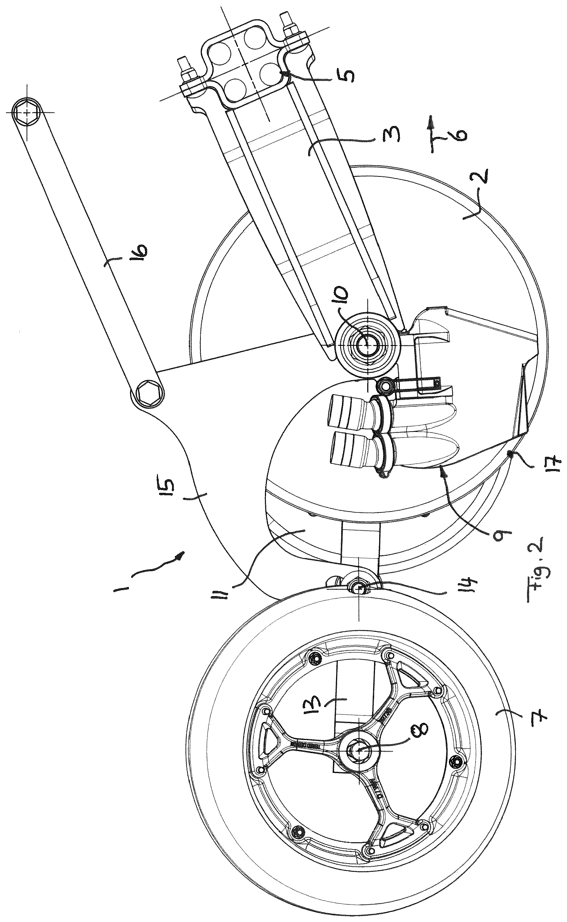

Um Saatgut oder ggf. auch Dünger direkt in der von der Scharscheibe 2 gezogenen Säfurche ablegen zu können, kann die Sämaschine ein Ausbringelement 9 aufweisen, welches direkt an der Scharscheibe 2 angeordnet sein kann, beispielsweise auf der Scharscheiben-Saat, auf der die Scharscheibe 2 mit ihrer Drehachse 10 an dem Schartragarm 3 gelagert ist, vgl. Fig. 2 und Fig. 3

Zusätzlich zu der Andrückrolle 7 umfasst das Scharsystem 1 eine Tiefenführungsrolle 11, die vorteilhafterweise in Fahrtrichtung 6 im Vergleich zur Andrückrolle 7 weiter vorne positioniert sein kann, vgl. Fig. 1.

Insbesondere kann die Tiefenführungsrolle 11 unmittelbar benachbart zu und überlappend mit der Scharscheibe 2 positioniert sein und einen Abstreifer bzw. eine Abstreiferrolle bilden, die an der Scharscheibe 2 haftenbleibende Erdklumpen, Krümel und dergleichen abstreifen kann.

Wie die Figuren zeigen, sind die Andrückrolle 7 und die Tiefenführungsrolle 11 mit ihren Drehachsen 8 bzw. 12 an einem gemeinsamen Aufhängungsträger 13 befestigt, der im Bereich zwischen den Drehachsen 8 und 12 der Andrückrolle 7 und der Tiefenführungsrolle 11 um eine Wippachse 14 wippbar gelagert ist. Die genannte Wippachse 14 kann sich insbesondere liegend quer zur Fahrtrichtung 6 erstrecken.

Mit der genannten Wippachse 14 ist der Aufhängungsträger 13 an einem Anlenkträger 15 aufgehängt, der vorteilhafterweise höhenverstellbar sein kann, um die Höhe des Anlenkpunkts des wippbaren Aufhängungsträgers 13 für die Andrück- und Tiefenführungsrollen 7, 11 in der Höhe verstellen und damit die Arbeitstiefe der Scharscheibe 2 einstellen zu können.

Beispielsweise kann der genannte Anlenkträger 15 schwenkbar gelagert sein, um durch Verschwenken die Höhe des Aufhängungsträgers 13 verändern zu können, wobei der Anlenkträger 15 um eine Schwenkachse liegend quer zur Fahrtrichtung 6 schwenkbar aufgehängt sein kann. Beispielsweise kann der Anlenkträger 15 an dem Schartragarm 3, insbesondere im Bereich der Drehachse 10 der Scharscheibe 2 aufgehängt sein.

Insbesondere kann der Anlenkträger 15 Teil eines Viergelenks bilden, welches einerseits den schwenkbaren Schartragarm 3 umfasst und andererseits eine Stützstrebe 16 umfasst, welche einerseits gelenkig am Anlenkträger 15 und andererseits gelenkig an einem Maschinenrahmenabschnitt oder einer damit verbundenen Anlenkkonsole gelagert ist, wobei sich die genannte Stützstrebe 16 bzw. eine Verbindungslinie durch deren gelenkige Anlenkpunkte näherungsweise parallel zum Schartragarm 3 erstrecken kann, vgl. Fig. 2. Beispielsweise kann die Stützstrebe 16 längenveränderbar ausgebildet sein, um die Höhe des Aufhängungsträgers 13 verstellen zu können. Alternativ oder zusätzlich kann auch einer der Gelenkpunkte der Stützstrebe 16 verschiebbar ausgebildet sein, um die Stützstrebe 16 gegenüber dem Maschinenrahmenteil und/oder gegenüber dem Anlenkträger 15 verschieben und damit den besagten Anlenkträger 15 zum Zwecke der Höheneinstellung verschwenken zu können.

Wie die Fig. 1 bis 3 zeigen, kann die Bogey-artige Aufhängung umfassend den wippbaren Aufhängungsträger 13 die Tiefenführungsrolle 11 direkt benachbart zu und überlappend mit der Scharscheibe 2 führen, so dass ein Schnittpunkt 17, vgl. Fig. 1 und Fig. 2, zwischen den Außenumfängen der Scharscheibe 2 einerseits und der Tiefenführungsrolle 11 andererseits im Bereich eines Austrittspunkts liegt, an dem die Scharscheibe 2 aus der Säfurche austritt bzw. das Erdreich verlässt. Die Scharscheibe 2 taucht bestimmungsgemäß mit einem unten liegenden Sekantenabschnitt in das Erdreich ein, so dass ein in Fahrtrichtung hinterer Endabschnitt des Eintauchbereichs im Übergangsbereich zum nicht in den Boden scharenden Scheibenteil den besagten Austrittspunkt definiert, welcher zumindest näherungsweise die Lage des Schnittpunkts 17 bestimmt.

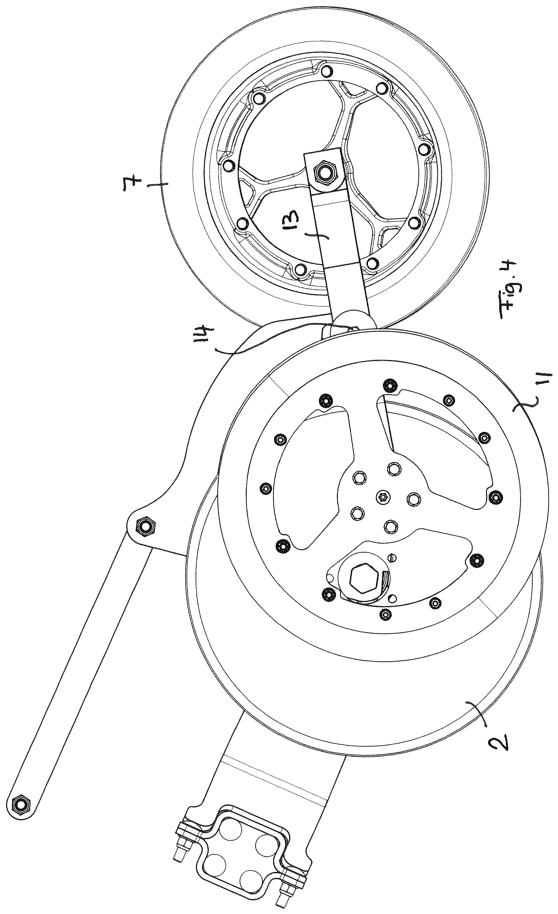

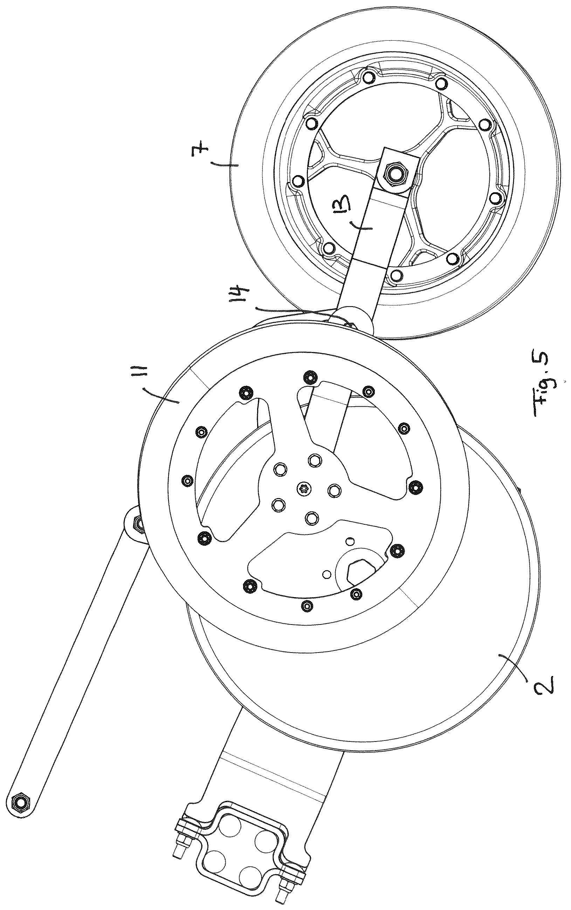

Wie die Figuren 4 und 5 verdeutlichen, kann die Tiefenführungsrolle 11 - im Tandem mit und gegenläufig zu der Andrückrolle 7 - durch die wippbare Aufhängung des Aufhängungsträgers 13 nach unten bzw. auch nach oben wippen, und zwar durch Wippen um die Wippachse 14. Wie die Figuren zeigen, verschieben sich durch solche Wippbewegungen des Aufhängungsträgers 13 und die entsprechende Auf- und Abbewegung der Tiefenführungsrolle 11 relativ zur Scharscheibe 2 auch der zuvor genannte Schnittpunkt 17 zwischen den Außenumfängen der Tiefenführungsrolle 11 und der Scharscheibe 2, und zwar weiter nach unten vorne, vgl. Fig. 4 bzw. weiter nach hinten und oben, vgl. Fig. 5. Nichtsdestotrotz ist in einer bestimmungsgemäßen Arbeitsstellung, wie sie Fig. 1 zeigt, der Schnittpunkt 17 im genannten Bereich des Austrittspunkts, an dem die Scharscheibe 2 aus der Säfurche austritt. Auch in den verstellten Positionen gemäß Fig. 4 und 5 ist der besagte Schnittpunkt 17 immer noch sehr nahe an dem genannten Austrittspunkt und in jedem Fall noch im unteren Drittel der Scharscheibe 2, so dass das Aufspritzen von Erdklumpen verhindert ist.

Wie die Figuren zeigen, kann die Wippachse 14 des Bogey-artigen Aufhängungsträgers 13 näherungsweise auf Höhe der Drehachse 10 der Scharscheibe 2 liegen, was je nach Höheneinstellung eine Veränderung erfahren kann, und dabei kurz hinter der Scharscheibe 2 bzw. benachbart zum hinteren Ende der Scharscheibe 2 angeordnet sein, vgl. Fig. 1 und 2.

Um die Aufteilung der Bodenaufstandskräfte der Tiefenführungsrolle 11 und der Andrückrolle 7 zu steuern bzw. zu variieren, können die Hebelverhältnisse des Aufhängungsträgers 13 bezüglich der Wippachse 14 entsprechend eingestellt bzw. variiert werden. Soll beispielsweise der Andrückrolle 7 mehr Druck gegeben werden als der Tiefenführungsrolle 11, kann die Teillänge des Aufhängungsträgers 13 von der Wippachse 14 zur Andrückrolle 7 hin verkürzt werden. Genauer gesagt kann der Abstand zwischen Wippachse 14 und Drehachse 8 der Andrückrolle 7 kleiner gewählt werden als der Abstand der Wippachse 14 von der Drehachse 12 der Tiefenführungsrolle 11.

Um eine Bodenanpassung an unterschiedliche Bodenbeschaffenheiten, beispielsweise feuchte oder trockene Böden zu erzielen, kann das besagte Hebelverhältnis des Aufhängungsträgers 13 bzw. dessen Asymmetrie hinsichtlich der Positionierung der Wippachse 14 verändert werden. In einfachster Ausgestaltung der Erfindung kann der besagte Aufhängungsträger 13 ausgetauscht werden und durch einen anderen Aufhängungsträger 13 ersetzt werden, der andere Hebelverhältnisse besitzt bzw. bei dem das Verhältnis der Abstände zwischen Wippachse 14 und Andrückrollen-Drehachse einerseits und Wippachse 14 und Tiefenführungsrollen-Drehachse andererseits unterschiedlich ist.

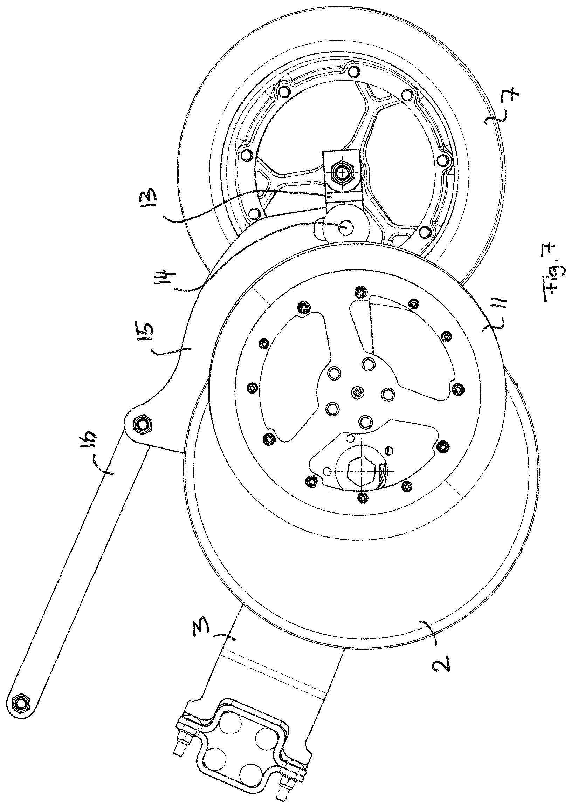

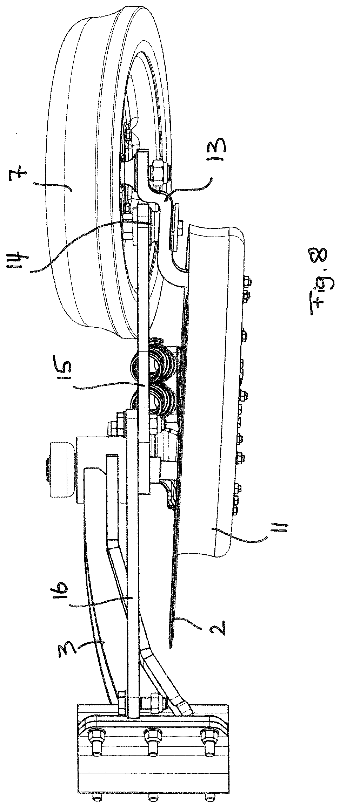

Während in den Fig. 1-5 die Wippachse 14 näherungsweise mittig zwischen den Drehachsen der Andrückrollen 7 und der Tiefenführungsrolle 11 positioniert ist bzw. nur geringfügig zur Andrückrolle 7 hin verschoben ist, zeigen die Fig. 7 und 8 ein Ausführungsbeispiel, bei dem die Asymmetrie deutlich stärker ausgeprägt ist und die Wippachse 14 deutlich näher an der Drehachse 8 der Andrückrolle 7 sitzt. Hierdurch kann der Druck der Andrückrolle 7 auf den Boden deutlich höher werden als der Druck der Tiefenführungsrolle 11. Beispielsweise kann, wie Fig. 7 zeigt, das Verhältnis beispielsweise 25:75 gewählt sein, d.h. die Teillänge des Aufhängungsträgers 13 zwischen Wippachse 14 und Andrückrollen-Drehachse 8 kann 25% der Gesamtlänge betragen und die Teillänge zwischen Wippachse 14 und Drehachse 12 der Tiefenführungsrolle 11 kann 75% der Gesamtlänge betragen. Andere Längenverhältnisse sind möglich, wie eingangs erwähnt.

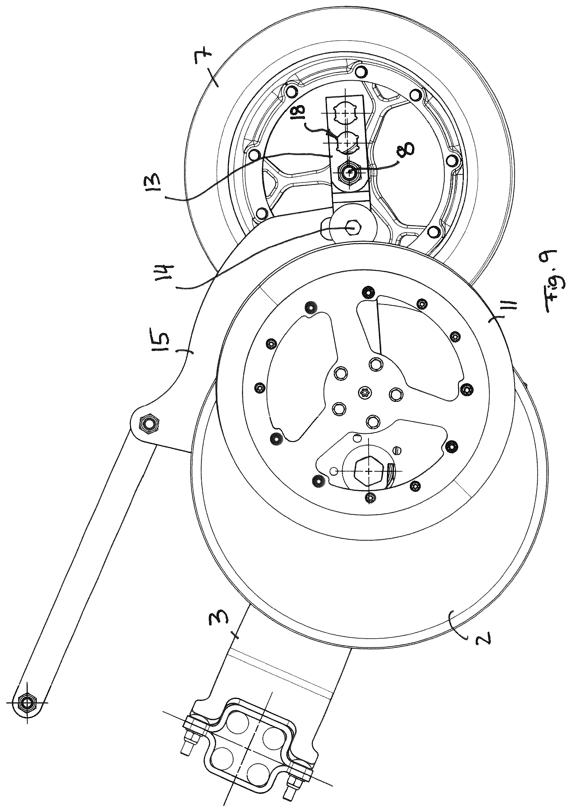

Wie die Fig. 9 zeigt, kann der Aufhängungsträger 13 auch eine Einstellvorrichtung zum variablen Einstellen der besagten Hebelverhältnisse bzw. der besagten Asymmetrie aufweisen, beispielsweise in Form eines Lochbilds 18 umfassend verschiedene Durchgangsausnehmungen, die unterschiedlich weit von der Wippachse 14 beabstandet sind und in die sich die Drehachse 10 der Andrückrolle 7 einstecken lässt. Alternativ oder zusätzlich zu einem solchen Lochbild könnte auch ein Langloch im Aufhängungsträger 13 vorgesehen sein, in welchem die Lagerung der Andrückrolle 7 verschoben werden kann, wobei beispielsweise mittels verstellbarer Anschläge die gewünschte Position fixiert werden könnte.

Eine Verstellung der Hebelverhältnisse durch Verstellen des Anlenkpunkts der Andrückrolle 7 besitzt den Vorteil, dass die Geometrieverhältnisse zwischen Tiefenführungsrolle 11 und Scharscheibe 2 nicht verstellt werden, insbesondere der genannte Schnittpunkt 17 erhalten bleibt.

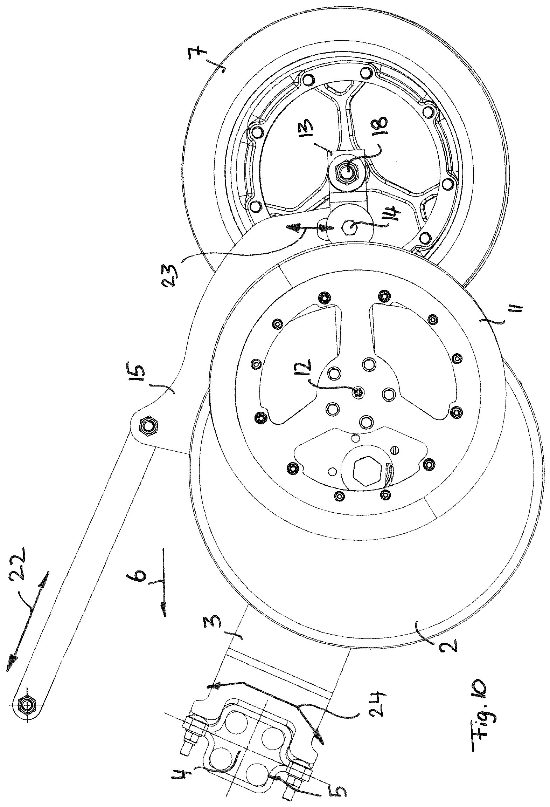

Fig. 10 verdeutlicht die verschiedenen Einstellmöglichkeiten des Scharsystems 1. Wie weiter oben schon kurz erläutert, kann die Höhe des Aufhängungsträgers 13 einerseits durch Verschwenken des Anlenkträgers 15 verstellt werden, um hierdurch die Arbeitstiefe der Scharscheibe 2 zu verändern. Hierzu kann beispielsweise die genannte Stützstrebe 16 in der Länge verändert bzw. an ihrem maschinenrahmenseitigen Anlenkpunkt verstellt werden, vgl. Pfeil 22 in Fig. 10.

Alternativ oder zusätzlich kann auch die Position der Wippachse 14 an den genannten Anlenkträger 15 vorteilhafterweise verändert werden, insbesondere in der Höhe verstellt werden, vgl. Pfeil 23 in Fig. 10. Eine solche Verstellung der Wippachse 14 relativ zum Anlenkträger 15 kann insbesondere eine Feineinstellung erreichen, was insbesondere auch vorteilhaft sein kann, um die nebeneinander aufgereihten Scharscheiben 2 auf gleiche Arbeitstiefen einjustieren zu können.

Alternativ oder zusätzlich wäre es auch möglich, den Anlenkpunkt des Anlenkträgers 15 an dem Schartragarm 3 zu verstellen, beispielsweise über eine Langlochführung und zugeordnete, verstellbare Anschläge. Durch eine solche Verstellung kann ebenfalls der Anlenkträger 15 in seiner Drehstellung verändert und damit eine Höhenverstellung der Wippachse 14 erzielt werden.

Ferner alternativ oder zusätzlich ist es auch möglich, die Grundstellung des Schartragarms 3 zu verstellen, beispielsweise durch Verschwenken des Querträgers 4, was in Fig. 10 ebenfalls illustriert ist, vgl. Pfeil 24. Hierdurch kann das von dem Schartragarm 3 und der Stützstrebe 16 gebildete Viergelenk verstellt und damit die Höhe der Wippachse 14 variiert werden, was wiederum zu einer entsprechenden Veränderung der Arbeitstiefe der Scharscheibe 2 führt.

Wie Fig. 11 zeigt, können auch Zwillings-Andrückrollen 7 vorgesehen sein, die in an sich analoger Weise an dem gemeinsamen, wippbaren Aufhängungsträger 13 befestigt sein können, vgl. Fig. 11.

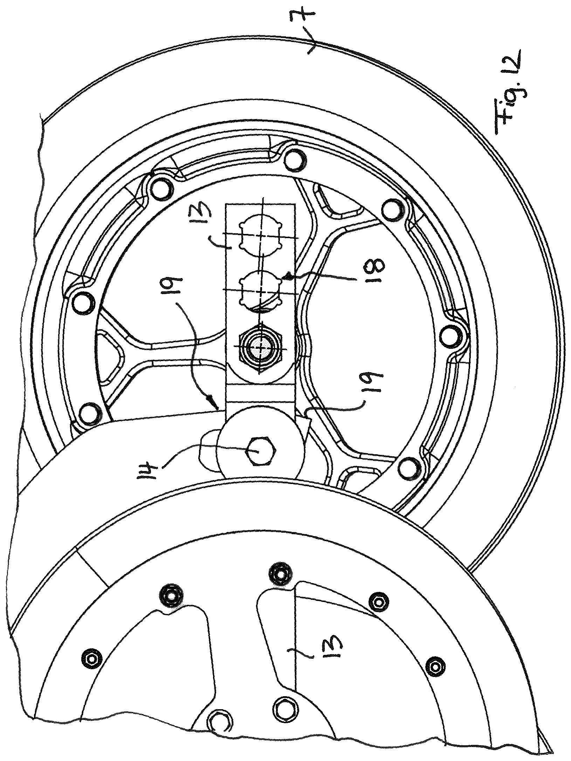

Wie Fig. 12 verdeutlicht, kann die Wippbarkeit des genannten Aufhängungsträgers 13 begrenzt werden, was beispielsweise durch Wippanschläge 19 erreichbar ist, die den Aufhängungsträger 13 bei Erreichen der maximal zulässigen Wippstellung an dem Anlenkträger 15 anstehen lassen, vgl. Fig. 12.

Um die Abstreiferwirkung der Tiefenführungsrolle 11 zu verstärken, kann die Tiefenführungsrolle 11 zur Scharscheibe 2 hin eine spitzwinklig ausgebildete bzw. ohne spürbare Abrundung ausgebildete Kante aufweisen, die den Übergangsbereich zwischen der umfangsseitigen Lauffläche und der der Scharscheibe 2 zugewandten Seitenwange bildet, vgl. beispielsweise Fig. 3 und Fig. 11. Die Lauffläche 20 selbst kann leicht konkav konturiert sein, vgl. Fig. 3 und Fig. 11, so dass die Lauffläche 20 zu den Seitenwangen hin ansteigt, wobei zur Scharscheibe 2 hin die spitzwinklige Kante 21 vorgesehen sein kann. Auf der von der Scharscheibe 2 abgewandten Seite kann der Übergang der Lauffläche 20 zur Seitenwange der Tiefenführungsrolle 11 hin abgerundet sein, vgl. Fig. 3 und Fig. 11.

## Patentansprüche

1. Scharsystem für eine landwirtschaftliche Arbeitsmaschine, mit einer Scharscheibe (2) zum Ziehen einer Säfurche, einer Tiefenführungsrolle (11) zur Arbeitstiefenführung der Scharscheibe (2) sowie einer der Scharscheibe (2) nachlaufenden Andrückrolle (7) zum Andrücken von in der Säfurche abgelegtem Gut und/oder Verschließen der Säfurche, **dadurch gekennzeichnet, dass** die Tiefenführungsrolle (11) und die Andrückrolle (7) nach Art eines Bogey-Fahrwerks an einem gemeinsamen, wippbaren Aufhängungsträger (13) gelagert sind, wobei die Tiefenführungsrolle (11) überlappend mit und angrenzend an eine Stirnseite der Scharscheibe (2) angeordnet ist und einen Abstreifer zum Abstreifen von Erdreich von der Scharscheibe (2) bildet.

2. Scharsystem nach dem vorhergehenden Anspruch, wobei die Tiefenführungsrolle (11) derart angeordnet ist, dass, bei Betrachtung des Scharsystems in einer Blickrichtung liegend quer zur Fahrtrichtung (6), ein Schnittpunkt (17) der Außenumfänge der Scharscheibe (2) und der Tiefenführungsrolle (11) zumindest näherungsweise im Bereich eines Austrittspunkts liegt, an dem die Scharscheibe (2) aus der Säfurche austritt und/oder den Boden verlässt.

3. Scharsystem nach dem vorhergehenden Anspruch, wobei der genannte Schnittpunkt (17) in einem hinteren, unteren Quadranten der Scharscheibe (2) liegt.

4. Scharsystem nach einem der vorhergehenden Ansprüche, wobei die Tiefenführungsrolle (11) eine Drehachse (12) besitzt, die in Fahrtrichtung (6) betrachtet zwischen der Drehachse (10) der Scharscheibe (2) und einem hintersten Umfangspunkt der Scharscheibe (2) liegt, wobei sich die Drehachse (12) der Tiefenführungsrolle (11) in Abhängigkeit einer Wippstellung des Aufhängungsträgers (13) gegenüber der Höhe der Drehachse (10) der Scharscheibe (2) nach oben und nach unten versetzt ist, wobei die genannte Drehachse (12) der Tiefenführungsrolle (11), bei Betrachtung des Scharsystems in einer Blickrichtung liegend quer zur Fahrtrichtung (6), innerhalb einer hinteren Hälfte der Scharscheibe (2) positioniert ist.

5. Scharsystem nach einem der vorhergehenden Ansprüche, wobei die Tiefenführungsrolle (11), bei Betrachtung eines Querschnitts, der die Drehachse (12) der Tiefenführungsrolle (11) enthält, eine spitzwinklige Übergangskante (21) und/oder eine Knickspantkontur zur Scharscheibe (2) hin besitzt, wobei die genannte spitzwinklige Kante (21) und/oder die Knickspantkontur einen Übergangsbereich zwischen einer umfangsseitigen Lauffläche (20) und einer Seitenwange der Tiefenführungsrolle (11), die der Scharscheibe (2) zugewandt ist, bildet, wobei die genannte Lauffläche (20), bei Betrachtung eines Querschnitts enthaltend die Drehachse (12) der Tiefenführungsrolle (11), konkav gewölbt ist und zu den Seitenwangen hin ansteigt.

6. Scharsystem nach einem der vorhergehenden Ansprüche, wobei der Aufhängungsträger (13) bezüglich der Position seiner Wippachse (14) asymmetrisch ausgebildet ist.

7. Scharsystem nach dem vorhergehenden Anspruch, wobei eine Teillänge des Aufhängungsträgers (13) von der Wippachse (14) zu der Drehachse (8) der Andrückrolle (7) kürzer ist als eine Teillänge des Aufhängungsträgers (13) von der Wippachse (14) zu der Drehachse (12) der Tiefenführungsrolle (11), und/oder das Verhältnis der Teillänge von der Wippachse (14) zur Drehachse (8) der Andruckrolle (7) zu der Teillänge von der Wippachse (14) zu der Drehachse (12) der Tiefenführungsrolle (11) im Bereich von 20:80 bis 40:60 oder von 25:75 bis 33:67 beträgt.

8. Scharsystem nach einem der vorhergehenden Ansprüche, wobei der Aufhängungsträger (13) hinsichtlich der Stärke der Asymmetrie der Position der Wippachse (14) einstellbar ausgebildet ist.

9. Scharsystem nach dem vorhergehenden Anspruch, wobei eine Einstellvorrichtung zum Einstellen des Verhältnisses der Teillänge von der Wippachse (14) zur Drehachse (8) der Andrückrolle (7) zur Teillänge von der Wippachse (14) zur Drehachse (12) der Tiefenführungsrolle (11) vorgesehen und derart ausgebildet ist, dass auch für unterschiedliche Teillängenverhältnisse die Tiefenführungsrolle (11) ihre Positionierung relativ zur Scharscheibe (2) beibehält, insbesondere einen Schnittpunkt (17) ihres Außenumfangs mit dem Außenumfang der Scharscheibe (2) besitzt, der im Bereich des Austrittspunktes liegt, an welchem die Scharscheibe (2) die Säfurche verlässt.

10. Scharsystem nach dem vorhergehenden Anspruch, wobei die genannte Einstellvorrichtung eine verstellbare Befestigung zum Befestigen der Andrückrolle (7) an dem Aufhängungsträger (13) in verschiedenen Abständen von der Wippachse (14) aufweist, wobei der Aufhängungsträger (13) ein Lochbild (18) zum Positionieren der Drehachse (8) der Andrückrolle (7) in verschiedenen Positionen an dem Aufhängungsträger (13) umfasst und/oder längenveränderbar oder teleskopierbar ausgebildet ist, insbesondere zwischen seiner Wippachse (14) und der Andrückrolle (7).

11. Scharsystem nach einem der vorhergehenden Ansprüche, wobei der Aufhängungsträger (13) mit seiner Wippachse (14) an einem Anlenkträger (15) befestigt ist, der höhenverstellbar und/oder höhenverschwenkbar gelagert ist.

12. Scharsystem nach dem vorhergehenden Anspruch, wobei der genannte Anlenkträger (15)
- an einem die Scharscheibe (2) tragenden Schartragarm (3) gelenkig befestigt ist und durch eine Stützstrebe (16) an einem das Scharsystem tragenden Maschinenrahmen abstützbar ist, und/oder
- zusammen mit dem Schartragarm (3), der die Scharscheibe (2) trägt, Teil eines Viergelenks ist, insbesondere Teil eines parallelogrammartigen Viergelenks ist.

13. Scharsystem nach einem der vorhergehenden Ansprüche, wobei der Aufhängungsträger (13) mit seiner Wippachse (14) höhenverstellbar an dem/einem Anlenkträger (15) befestigt ist.

14. Scharsystem nach einem der vorhergehenden Ansprüche, wobei eine Arbeitstiefen-Einstellvorrichtung zum Verstellen einer Ausgangsstellung eines die Scharscheibe (2) tragenden Schartragarms (3) vorgesehen ist.

15. Landwirtschaftliche Ausbringmaschine, insbesondere in Form einer Sämaschine, wobei die Ausbringmaschine ein Scharsystem (1), das gemäß einem der vorhergehenden Ansprüche ausgebildet ist, aufweist.
